# EUROPEAN PATENT APPLICATION

(11) **EP 4 840 299 A1**
(43) Date of publication of application: **18.11.2026**
(21) Application number: 26169379.0
(22) Date of filing: 31.03.2026
(51) Int. Cl.: A01K 1/015, A01K 1/035, A01K 63/06

(54) **WATER-FILLED MAT FOR PETS**

(30) Priority: 27.04.2025 CN 202520816027 U
(71) Applicant: Jiangsu Zhongheng Pet Articles Joint-Stock Co., Ltd., Yancheng, Jiangsu 224000 (CN)
(72) Inventor: QIU, Bin, Yancheng, 224000 (CN)
(74) Representative: Miller, Ronald Anthony

(57) **Abstract**

The present invention relates to the field of pet products, and specifically to a water-filled mat for pets. A water-filled mat for pets provided by the present invention includes a mat body, a first water tank, an aluminum profile container, a pump, a control circuit board, a first pipe, a second pipe, a third pipe, a cooling module, and a heating module. The first pipe is arranged in the mat body. Two ends of the first pipe are respectively connected to the first water tank and the aluminum profile container. Two ends of the second pipe are respectively connected to the first water tank and the pump. Two ends of the third pipe are respectively connected to the pump and the aluminum profile container. The cooling module is connected to a first side of the aluminum profile container. The heating module is connected to a second side of the aluminum profile container. The heating module and the cooling module are configured to operate independently to prevent the heating module and the cooling module from affecting each other, thereby improving the heating or cooling efficiency and reducing the energy consumption. The first water tank and the aluminum profile container are detachably mounted to the mat body, so that the first water tank and the aluminum profile container may be conveniently cleaned to remove scale that affects the heating or cooling effect.

## Description

### TECHNICAL FIELD

The present invention relates to the field of pet products, and specifically to a water-filled mat for pets.

### BACKGROUND

With the continuous improvement of living standards, more people are keeping pets. Some household pets need to be kept warm in winter and cool in summer, because excessively high or low temperatures may negatively impact their health, even making them sick, which will bring trouble to their owners. In the prior art, heating/cooling mats for pets are usually used to meet the needs of pets.

In conventional heating/cooling mats for pets, generally a semiconductor cooler/heater is provided outside a heat exchanger to heat or cool water in the heat exchanger to meet the needs of pets. However, in the heating process, the semiconductor cooler/heater operates by heating and cooling on its two sides respectively. When water in the heat exchanger is heated by the semiconductor cooler/heater, cool air generated on the cooling side of the semiconductor cooler/heater will affect the heating effect on the heating side, which will slow down the heating of the water in the mat body and lead to increased energy consumption.

### SUMMARY

To solve the technical problem of low cooling/heating efficiency and high energy consumption of conventional heating/cooling mats for pets caused by the impact of the cooling side and the heating side of the semiconductor cooler/heater on each other during operation, an objective of the present invention is to provide a water-filled mat for pets.

To achieve the above objective, an embodiment of the present invention provides a water-filled mat for pets, including:
a mat body, a first water tank, an aluminum profile container, a pump, a control circuit board;
a first pipe, where the first pipe is arranged in the mat body, and two ends of the first pipe are respectively connected to the first water tank and the aluminum profile container;
a second pipe, where two ends of the second pipe are respectively connected to the first water tank and the pump;
a third pipe, where two ends of the third pipe are respectively connected to the pump and the aluminum profile container;
a cooling module, where the cooling module is connected to a first side of the aluminum profile container; and
a heating module, where the heating module is connected to a second side of the aluminum profile container.

In the above technical solution, the water-filled mat for pets further includes:
two first connection members, where the two first connection members extend through the first water tank and are connected to the first water tank, and a first groove is provided on a side of each of the two first connection members;
two second connection members, where each of the two second connection members is connected to a side of a respective one of the two first connection members away from the first groove, each of the two second connection members is provided with a first through hole, the first through hole is in communication with the first groove, and the two second connection members are respectively connected to the first pipe and the second pipe;
two third connection members, where the two third connection members extend through the aluminum profile container and are connected to the aluminum profile container, and a second groove is provided on a side of each of the two third connection members; and
two fourth connection members, where each of the two fourth connection members is connected to a side of a respective one of the two third connection members away from the second groove, each of the two fourth connection members is provided with a second through hole, the second through hole is in communication with the second groove, and the two fourth connection members are respectively connected to the first pipe and the third pipe.

In the above technical solutions, the water-filled mat for pets further includes:
a second water tank, where the second water tank is connected to the first water tank;
a fourth pipe, where two ends of the fourth pipe are respectively connected to the first water tank and the second water tank; and
a one-way valve, where the one-way valve is connected to the fourth pipe.

In the above technical solutions, the water-filled mat for pets further includes:
a momentary switch, where the momentary switch is arranged in the mat body, and the momentary switch is connected to the control circuit board.

Additional aspects and advantages of the present invention will be apparent from the description below, or understood through practice of the present invention.

### BRIEF DESCRIPTION OF THE DRAWINGS

The above and/or other additional aspects and advantages of the present invention will become apparent and comprehensible from the description of embodiments made in connection with the accompanying drawings, in which:
FIG. 1 is an overall schematic structural view of the present invention.
FIG. 2 is a schematic structural bottom view of the present invention.
FIG. 3 is a schematic structural cross-sectional view of a first water tank and a second water tank according to the present invention.
FIG. 4 is a schematic structural cross-sectional view of an aluminum profile container according to the present invention.
FIG. 5 is a schematic structural view of a first connection member according to the present invention.
FIG. 6 is a schematic structural view of a second connection member according to the present invention.

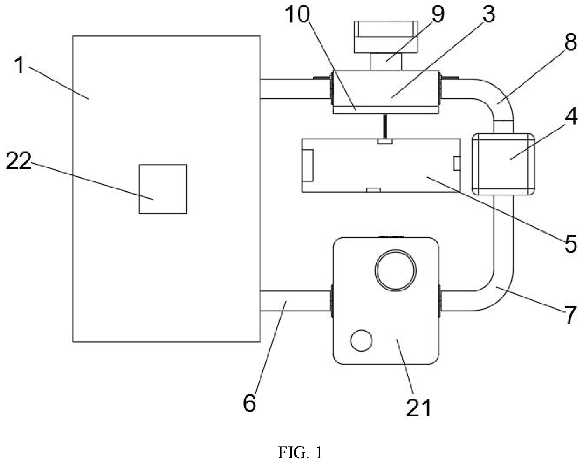

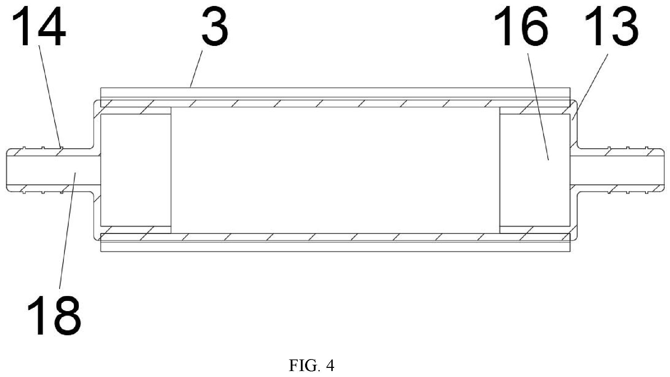

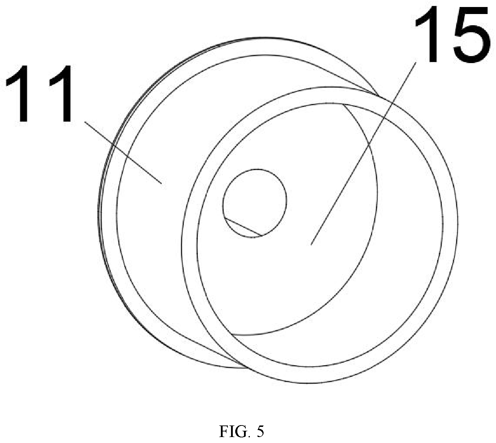

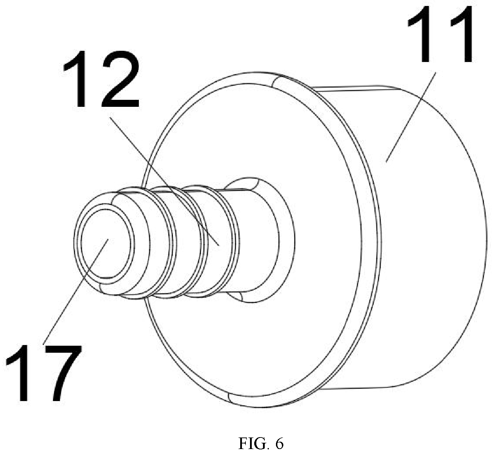

In FIG. 1 to FIG. 6, the reference numerals respectively represent:
1. mat body; 2. first water tank; 3. aluminum profile container; 4. pump; 5. control circuit board; 6. first pipe; 7. second pipe; 8. third pipe; 9. cooling module; 10. heating module; 11. first connection member; 12. second connection member; 13. third connection member; 14. fourth connection member; 15. first groove; 16. second groove; 17. first through hole; 18. second through hole; 19. fourth pipe; 20. one-way valve; 21. second water tank; 22. momentary switch.

### DETAILED DESCRIPTION OF THE EMBODIMENTS

To make the objectives, features, and advantages of the present invention more comprehensible, the present invention will be described in detail below with reference to the accompanying drawings and specific embodiments. It should be noted that the embodiments of the present invention and the features in the embodiments may be combined with each other without conflict.

Many specific details are set forth in the following description to provide a full understanding of the present invention. However, the present invention can also be implemented in other ways different from those described herein, so the scope of protection of the present invention is not limited by the specific embodiments disclosed below.

A water-filled mat for pets according to some embodiments of the present invention will be described below with reference to FIG. 1 to FIG. 6.

As shown in FIG. 1 to FIG. 6, an embodiment of the present invention provides a water-filled mat for pets, including a mat body 1, a first water tank 2, an aluminum profile container 3, a pump 4, a control circuit board 5, a first pipe 6, a second pipe 7, a third pipe 8, a cooling module 9, and a heating module 10.

Specifically, the first pipe 6 is arranged in the mat body 1. Two ends of the first pipe 6 are respectively connected to the first water tank 2 and the aluminum profile container 3. Two ends of the second pipe 7 are respectively connected to the first water tank 2 and the pump 4. Two ends of the third pipe 8 are respectively connected to the pump 4 and the aluminum profile container 3. The cooling module 9 is connected to a first side of the aluminum profile container 3. The cooling module 9 is a semiconductor cooler. The heating module 10 is connected to a second side of the aluminum profile container 3. The heating module 10 is a Positive Temperature Coefficient (PTC) heater.

When the weather is hot, a user manually turns off the PTC heater, turns on the semiconductor cooler, and fills up the first water tank 2 with water. When the water-filled mat starts to operate upon being powered on, the control circuit board 5 sends a control signal to control the semiconductor cooler to start to cool the aluminum profile container 3. In this process, the pump 4 starts to operate, and the water in the first water tank 2 flows through the second pipe 7, the pump 4, the third pipe 8, the aluminum profile container 3, and the first pipe 6 in sequence, and finally flows back into the first water tank 2. During the process of water circulation, the semiconductor cooler may cool the aluminum profile container 3, and the aluminum profile container 3 may cool the water flowing through the aluminum profile container 3 to lower the temperature of the circulating water. A temperature sensor is arranged in the aluminum profile container 3. When the temperature sensor detects that the water in the aluminum profile container 3 reaches a predetermined temperature, the control circuit board 5 sends a control instruction to the semiconductor cooler to control the semiconductor cooler to stop operation. As such, the water in the first pipe 6 is always in a low-temperature state. Because the first pipe 6 is arranged in the mat body 1, a pet can comfortably rest on the mat body 1 when the ambient temperature is high. In addition, because the PTC heater does not operate while the semiconductor cooler is in operation, the PTC heater does not affect the semiconductor cooler, so that the cooling efficiency is improved and the energy consumption is reduced.

When the weather is cold, a user manually turns off the semiconductor cooler, turns on the PTC heater, and fills up the first water tank 2 with water. The working principle of the subsequent heating process is the same as that of the cooling process, so the details will not be repeated herein. In the heating process, because the semiconductor cooler does not operate while the PTC heater is in operation, the semiconductor cooler does not affect the PTC heater, so that the heating efficiency is improved and the energy consumption is reduced.

In addition, an inner diameter of the first water tank 2 and an inner diameter of the aluminum profile container 3 are larger than an inner diameter of the first pipe 6, an inner diameter of the second pipe 7, and an inner diameter of the third pipe 8, so that the aluminum profile container 3 has a larger accommodating cavity that can be used for storing water to some extent. As such, both the aluminum profile container 3 and the first water tank 2 can store water in the process of water circulation, so that a user does not need to frequently add water.

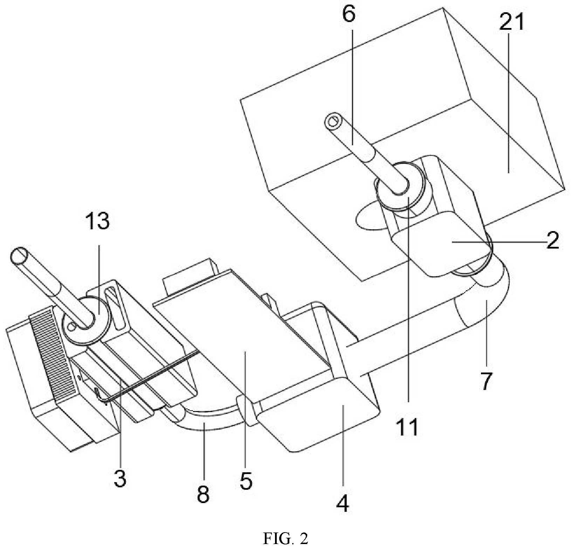

As shown in FIG. 2 to FIG. 6, in an embodiment of the present invention, the water-filled mat for pets further includes:
two first connection members 11, where the two first connection members 11 extend through the first water tank 2 and are fixedly connected to the first water tank 2, and a first groove 15 is provided on a side of each of the two first connection members 11 adjacent to an interior of the first water tank 2;
two second connection members 12, where each of the two second connection members 12 is fixedly connected to a side of a respective one of the two first connection members 11 away from the first groove 15, each of the two second connection members 12 is provided with a first through hole 17, the first through hole 17 is in communication with the first groove 15, and the two second connection members 12 are respectively connected to the first pipe 6 and the second pipe 7;
two third connection members 13, where the two third connection members 13 extend through the aluminum profile container 3 and are fixedly connected to the aluminum profile container 3, and a second groove 16 is provided on a side of each of the two third connection members 13 adjacent to an interior of the aluminum profile container 3; and
two fourth connection members 14, where each of the two fourth connection members 14 is fixedly connected to a side of a respective one of the two third connection members 13 away from the second groove 16, each of the two fourth connection members 14 is provided with a second through hole 18, the second through hole 18 is in communication with the second groove 16, and the two fourth connection members 14 are respectively connected to the first pipe 6 and the third pipe 8. The arrangement of the first grooves 15 and the second grooves 16 can reduce the material consumption of the first connection members 11 and the third connection members 13, reducing the costs.

To assemble the water-filled mat, the two second connection members 12 are respectively inserted into an end of the first pipe 6 and an end of the second pipe 7 away from the pump 4. The second connection members 12, the first pipe 6, and the second pipe 7 are all made of plastic, and an outer diameter of each of the second connection members 12 is smaller than the inner diameter of the first pipe 6. After one of the second connection members 12 is inserted into the end of the first pipe 6, the first pipe 6 is slightly deformed, so that the second connection member 12 is in interference fit with the first pipe 6 to achieve a sealing effect and prevent water from leaking out from the connection between the first pipe 6 and the second connection member 12. Similarly, the other second connection member 12 is in interference fit with the second pipe 7 to prevent water from leaking out from the connection between the other second connection member 12 and the second pipe 7. Similarly, one of the fourth connection members 14 is in interference fit with an end of the third pipe 8 away from the pump 4 to prevent water from leaking out from the connection between the fourth connection member 14 and the third pipe 8. Similarly, an end of the first pipe 6 away from the first water tank 2 is in interference fit with the other fourth connection member 14 to prevent water from leaking out from the connection between the first pipe 6 and the other fourth connection member 14.

In addition, by the above assembly method, when the first water tank 2 needs to be cleaned, a user can conveniently remove the first water tank 2 by respectively pulling the first pipe 6 and the second pipe 7 off from the second connection members 12.

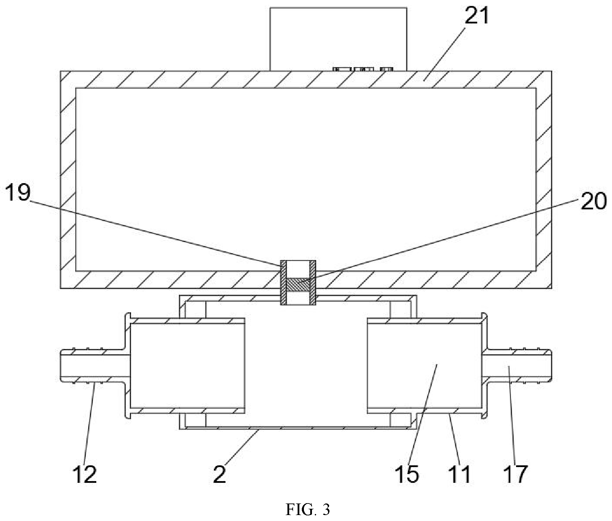

As shown in FIG. 3, in an embodiment of the present invention, the water-filled mat for pets further includes:
a second water tank 21, where the second water tank 21 is detachably mounted above the first water tank 2;
a fourth pipe 19, where two ends of the fourth pipe 19 respectively pass through and are fixedly connected to an upper end of the first water tank 2 and a lower end of the second water tank 21; and
a one-way valve 20, where the one-way valve 20 is fixedly connected to the fourth pipe 19.

Considering that the amount of circulating water will continuously decrease in the process of water circulation, the second water tank 21 is filled up with water, and the water in the second water tank 21 will continuously flow into the first water tank 2 through the fourth pipe 19 under the action of gravity, continuously replenishing water for the first water tank 2 to ensure the normal operation of the water-filled mat. The arrangement of the one-way valve 20 on the fourth pipe 19 can prevent the water in the first water tank 2 from flowing into the second water tank 21, so that the heating module or the cooling module only needs to heat or cool the circulating water, but not need to heat or cool the water in the second water tank 21. As such, the efficiency of cooling or heating the circulating water is improved, and the energy consumption is greatly reduced.

In addition, thermal insulation cotton is sleeved over each of the first pipe 6, the second pipe 7, and the third pipe 8 to reduce heat exchange between water in the first pipe 6, the second pipe 7, and the third pipe 8 and an external environment, thereby further reducing the energy consumption.

A water level sensor is arranged in the second water tank 21. Because water is evaporated during the heating process, the water level in the second water tank 21 will gradually decrease. The control circuit board 5 is connected to a buzzer. When the water level in the second water tank 21 reaches a threshold, data detected by the water level sensor is transmitted to the control circuit board 5, and the control circuit board 5 controls the buzzer to make a sound to remind a user to add water in time.

As shown in FIG. 1, in an embodiment of the present invention, the water-filled mat for pets further includes:
a momentary switch 22, where the momentary switch 22 is arranged in the mat body 1, and the momentary switch 22 is connected to the control circuit board 5.

When a pet rests on the mat body 1, the momentary switch 22 is switched on under pressure of the pet, and the control circuit board 5 sends a control instruction to control the semiconductor cooler or the PTC heater to operate. When the pet leaves the mat body 1, the momentary switch 22 is switched off because the momentary switch 22 is relieved of pressure, and the control circuit board 5 sends an instruction to control the semiconductor cooler or the PTC heater not to operate. As such, energy waste caused by continuous operation of the semiconductor cooler or the PTC heater can be avoided.

It should be noted that the semiconductor cooler, the PTC heater, the water level sensor, the temperature sensor, and the momentary switch 22 in the present invention are commonly used in the prior art, so the specific models and working principles of these components will not be described in detail herein.

The present invention has the following advantages.
1. The heating module 10 and the cooling module 9 are configured to operate independently to prevent the heating module 10 and the cooling module 9 from affecting each other, thereby improving the heating or cooling efficiency and reducing the energy consumption.
2. The first water tank 2 and the aluminum profile container 3 are detachably mounted to the mat body 1, so that the first water tank 2 and the aluminum profile container 3 may be conveniently cleaned to remove scale that affects the heating or cooling effect.
3. Through the arrangement of the fourth pipe 19 and the one-way valve 20, the second water tank 21 may continuously supply water to the first water tank 2, and only the circulating water needs to be heated or cooled, so that the heating or cooling efficiency is improved and the energy consumption is reduced.
4. The momentary switch 22 is arranged in the mat body 1, so that when a pet rests on the mat body 1, the momentary switch 22 is switched on to heat or cool the aluminum profile container 3, and when the pet leaves the mat body 1, the heating or cooling of the aluminum profile container 3 is stopped. As such, the energy consumption may be reduced.

In the present invention, the terms such as "mount", "connect", "couple", "fix", and variants thereof should be interpreted in a broad sense. For example, "connection" may be a fixed connection, a detachable connection, or an integral connection; and "connection" may also be a direct connection or an indirect connection through an intermediate medium. For those of ordinary skill in the art, the specific meanings of the above terms in the present invention can be understood according to specific circumstances.

In the description of the present invention, it should be understood that the orientation or positional relationships indicated by the terms such as "inner" and "outer" are based on orientation or position relationships shown in the accompanying drawings, and are used only for ease and brevity of illustration and description, rather than indicating or implying that the mentioned apparatus or unit must have a particular orientation or must be constructed and operated in a particular orientation. Therefore, such terms should not be construed as limiting of the present invention.

In the description of this specification, the description with reference to the terms such as "an embodiment", "some embodiments", and "specific embodiment" means that specific features, structures, materials, or characteristics described in connection with the embodiment or example are embraced in at least one embodiment or example of the present invention. In this specification, exemplary descriptions of the foregoing terms do not necessarily refer to the same embodiment or example. Moreover, the described specific features, structures, materials, or characteristics may be combined in any suitable manner in one or more embodiments or examples.

The above description is merely preferred embodiments of the present invention, and is not intended to limit the present invention. To those skilled in the art, various modifications and variations may be made to the present invention. Any modification, equivalent replacement, or improvement made without departing from the spirit and principle of the present invention shall fall within the scope of protection of the present invention.

## Claims

1. A water-filled mat for pets, **characterized by** comprising:
a mat body, a first water tank, an aluminum profile container, a pump, a control circuit board;
a first pipe, wherein the first pipe is arranged in the mat body, and two ends of the first pipe are respectively connected to the first water tank and the aluminum profile container;
a second pipe, wherein two ends of the second pipe are respectively connected to the first water tank and the pump;
a third pipe, wherein two ends of the third pipe are respectively connected to the pump and the aluminum profile container;
a cooling module, wherein the cooling module is connected to a first side of the aluminum profile container; and
a heating module, wherein the heating module is connected to a second side of the aluminum profile container.

2. The water-filled mat for pets according to claim 1, **characterized by** further comprising:
two first connection members, wherein the two first connection members extend through the first water tank and are connected to the first water tank, and a first groove is provided on a side of each of the two first connection members;
two second connection members, wherein each of the two second connection members is connected to a side of a respective one of the two first connection members away from the first groove, each of the two second connection members is provided with a first through hole, the first through hole is in communication with the first groove, and the two second connection members are respectively connected to the first pipe and the second pipe;
two third connection members, wherein the two third connection members extend through the aluminum profile container and are connected to the aluminum profile container, and a second groove is provided on a side of each of the two third connection members; and
two fourth connection members, wherein each of the two fourth connection members is connected to a side of a respective one of the two third connection members away from the second groove, each of the two fourth connection members is provided with a second through hole, the second through hole is in communication with the second groove, and the two fourth connection members are respectively connected to the first pipe and the third pipe.

3. The water-filled mat for pets according to claim 2, **characterized by** further comprising:
a second water tank, wherein the second water tank is connected to the first water tank;
a fourth pipe, wherein two ends of the fourth pipe are respectively connected to the first water tank and the second water tank; and
a one-way valve, wherein the one-way valve is connected to the fourth pipe.

4. The water-filled mat for pets according to claim 3, **characterized by** further comprising:
a momentary switch, wherein the momentary switch is arranged in the mat body, and the momentary switch is connected to the control circuit board.
